(19) Europäisches Patentamt

European Patent Office

Office européen des brevets

(11) EP 1 229 697 A2

(12) **EUROPEAN PATENT APPLICATION**

(43) Date of publication:
07.08.2002 Bulletin 2002/32

(51) Int Cl.7: **H04L 25/03**

(21) Application number: 02100009.6

(22) Date of filing: 14.01.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: **22.01.2001 US 766688**

(71) Applicant: **AT&T Corp.**
**New York, NY 10013-2412 (US)**

(72) Inventors:
• **ARIYAVISITAKUL, Sirikiat, Lek**
**GA 30022, Alpharetta (US)**
• **SOLLENBERGER, Nelson, Ray**
**NJ 07727, Farmingdale (US)**
• **WINTERS, Jack, Harriman**
**NJ 07748, Middletown (US)**

(74) Representative: **Asquith, Julian Peter**
**Marks & Clerk,**
**4220 Nash Court,**
**Oxford Business Park South**
**Oxford OX4 2RU (GB)**

(54) **Weight-coefficients generation technique for DDFSE equaliser**

(57)    The present invention provides methods that produce coefficients and metric weights for an advanced DDFSE (ADDFSE) equalizer having one or more antennas with front-end filters, an MLSE device and a feedback filter that provide for improved performance and also provide for an ADDFSE equalizer that can effectively employ multiple antennas. Feed-forward and feedback coefficients generated using weight generation techniques adapted for DFE equalizers can be used to derive the coefficients of the front-end filters, the MLSE metric weights and the feedback filter coefficients.

FIG. 4
150

**Description**

BACKGROUND OF THE INVENTION

1. Field of Invention

This invention relates to methods for generating weights in an equalizer and methods and systems for using the weights.

2. Description of Related Art

Currently, noise, inter-symbol interference (ISI), and co-channel interference (CCI) are mitigated by using some form of equalization, such as linear equalization (LE), decision feedback equalization (DFE), maximum likelihood sequence estimation (MLSE), minimum mean square linear equalization (MMSE-LE) and delayed decision feedback sequence estimation (DDFSE), with MLSE equalization providing the best possible performance. However, because MLSE equalizers generally require excessive computational resources, other equalization techniques such as DDFSE can provide favorable alternatives for systems having limited resources.

Unfortunately, conventional DDFSE weight generation techniques do not produce good weights and thus the resulting systems are not optimal. Another problem with conventional DDFSE weight generation techniques is that they do not provide for multiple antennas and accordingly lack the advantages that multiple antennas provide such as mitigating fading and interference. Accordingly, there is a need for methods that generate weights for DDFSE equalizers that can provide improved performance and can accommodate multiple antennas.

SUMMARY OF THE INVENTION

The invention provides an advanced DDFSE (ADDFSE) equalizer. The ADDFSE equalizer includes one or more front-end filters, an MLSE and a feedback filter. The ADDFSE front-end filters enable the ADDFSE to support one or more antennas for multiple-antenna operations capable of mitigating the effects of Rayleigh fading.

For an ADDFSE equalizer having $F$ number of tap-delays in each of its front-end filters, $\mu$ number of tap-delays in its MLSE and $(B-\mu)$ number of tap-delays in its feedback filter, the tap-delays for the ADDFSE model may be generated using a DFE model having a feed-forward filter with $F$ taps ($f_1$, $f_2$,...$f_F$) and a feedback filter with $B$ taps ($b_1$, $b_2$...$b_B$). The coefficients of the $F$ feed-forward taps ($f_1$, $f_2$,...$f_F$) are assigned the $F$ coefficients for the ADDFSE front-end filters; the coefficients of the first $\mu$ feedback taps ($b_1$, $b_2$....$b_\mu$) are used to generate the MLSE metric weights; and the coefficients of the last $(B-\mu)$ feedback taps ($b_{\mu+1}$, $b_{\mu+1}$,...$b_B$) are assigned to the $(B-\mu)$ coefficients of the ADDFSE feedback filter.

DESCRIPTION OF THE DRAWINGS

The invention is described in detail with reference to the following figures, wherein like numerals reference like elements, and wherein:

Fig. 1 is a block diagram of an exemplary digital communication system;
Fig. 2 illustrates an exemplary communication system with multiple transmission paths giving rise to inter-symbol interference, co-channel interference and noise interference;
Fig. 3 illustrates an exemplary diagram of a transmitted impulse signal and a resultant impulse response;
Fig. 4 is a block diagram of an exemplary receiver;
Fig. 5 is a block diagram of an exemplary equalizer; and
Fig. 6 illustrates a mapping of DFE model coefficients to ADDFSE coefficients and metric weights; and
Fig. 7 is a flowchart outlining an exemplary operation of an equalization technique.

DETAILED DESCRIPTION OF PREFERRED EMBODIMENTS

The DDFSE equalizer provides a powerful architecture to mitigate the effects of noise, ISI and CCI. Unfortunately, previous techniques to generate coefficients and metric weights for DDFSEs have proved difficult, the resulting DDFSEs did not work well and the resulting DDFSEs could not accommodate multiple antennas. Because equalizers can generally benefit from multiple antennas, including mitigating the effects of Rayleigh fading and interference, previous DDFSE equalizers were limited in their practical applications.

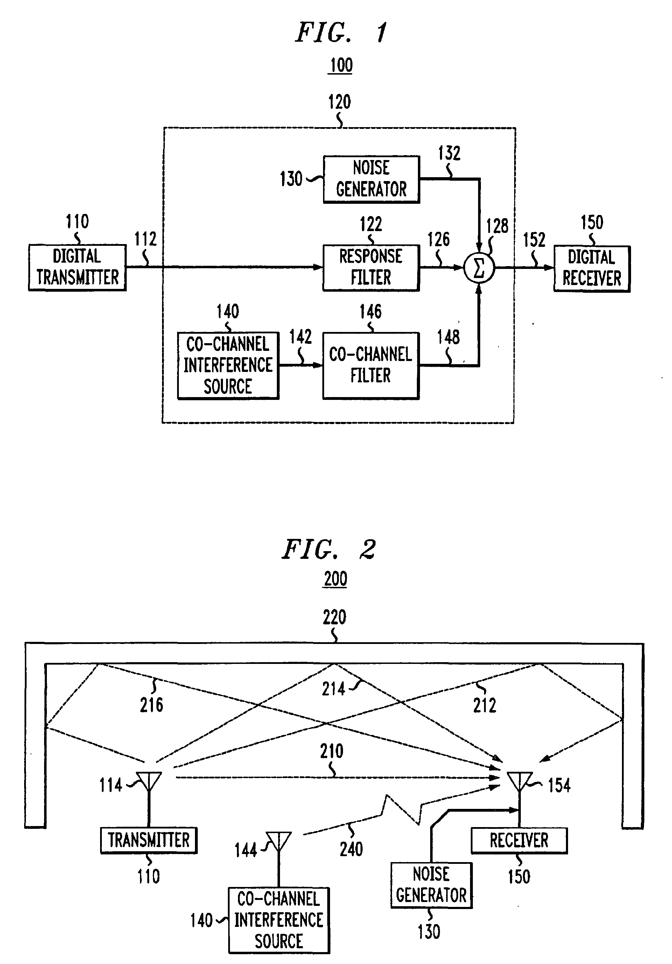

This invention provides an advanced DDFSE (ADDFSE) that expands traditional DDFSEs to utilize more than one antenna and respective front-end filter. The ADDFSE coefficients and metric weights are easily generated based on a DFE model. The ADDFSE significantly improves equalizer performance over traditional DDFSEs by providing better weights. The following description in connection with Figures 1-5 provides a general background discussion of data transmission environments in relation to equalizers.

Figure 1 shows an exemplary block diagram of a digital transmission system 100. The system 100 includes a digital transmitter 110, a transmission medium 120 and a digital receiver 150. The digital transmitter 110 can be any one of a number of different sources such as a wireless transmitter, a transmission system employing wires such as a twisted wire pair, a transmitter adapted for transmitting across coaxial cable, an optical transmitter, a fiber-optic transmitter, a sonic transmitter or any other known or later developed device suitable for transmitting digital symbol information.

The digital transmitter 110 can transmit a signal containing digital symbol information, i.e., the desired signal, through the transmission medium 120 via link 112 and the transmission medium 120 can provide filtered digital symbol information to the digital receiver 150 via link 152.

The links 112 and 152 can be any combination of devices including one or more antennas and associated electronics that can pass digital symbol information from the transmitter 110 to the transmission medium 120 and to the receiver 150 respectively.

As an example, the digital transmission medium 120 may have a response filter 122, a co-channel interference source 140 and co-channel filter 146, a noise generator 130 and a summing junction 128. The response filter 122 can receive the digital symbol information from the digital transmitter 110 via the link 122 and can provide filtered digital symbol information to the summing junction 128 via the link 126. As the digital symbol information transmitted by the digital transmitter 110 propagates through the transmission medium 120, the signal is distorted according to the characteristics of the transmission medium 120.

For example, concurrent with the digital symbol information transmission, the noise generator 130 generates noise and the co-channel interference source 140 generates one or more second signals that are filtered by the co-channel filter 146. Both the above noise and interference signals are added to the filtered digital symbol information at the summing junction 128 which then provides the sum to the digital receiver 150 via the link 152.

The response filter 122 can be any combination of filters that results due to any naturally occurring or artificial physical characteristics of the transmission medium 120 that can receive a signal from the digital transmitter 100 and provide a filtered signal to the receiver 150. The noise generator 130 can be any combination of sources capable of generating noise including average white Gaussian noise (AWGN), and the co-channel interference source 140 and filter 146 can be any number of systems or sources that can produce co-channel interference in the receiver 150. The summing junction 128 can be any device or element capable of receiving various signals and noise sources, combine the signals and noise, and provide the signals and noise to a digital receiver 150. The digital receiver 150 can be any one of a number of different receivers such as a wireless receiver, a reception system employing wires such as a twisted wire pair, a receiver adapted to receive signals from a coaxial cable, an optical receiver, a fiber optic receiver, a sonic receiver or any other known or later developed device suitable for receiving digital symbol information.

Fig. 2 is an exemplary block diagram of a wireless digital transmission system 200 for transmitting signals with digital symbol information. The wireless digital transmission system 200 includes a digital transmitter 110 with a transmitter antenna 114, a digital receiver 150 with a receiver antenna 154, a noise generator 130, a co-channel interference source 140 with a co-channel antenna 144 and a structure 220 capable of reflecting wireless radio signals.

The digital symbol information is transmitted from the digital transmitter 110 to the digital receiver 150 using antennas 114 and 154 respectively. As shown in Fig. 2, the digital symbol information transmitted by the digital transmitter 110 can reach the digital receiver 150 through a variety of paths. In Fig. 2, the digital symbol information reaches the digital receiver 150 directly through a first path 210 and also indirectly through a second path 212, a third path 214 and a fourth path 216 that are formed by reflections from the structure 220. The digital receiver 150 further receives noise from the noise generator 130 and signals from the co-channel source 140 via the path 240. While Fig. 2 depicts the digital receiver 150 as having a single antenna, it should be appreciated that the digital receiver 150 can alternatively have multiple antennas.

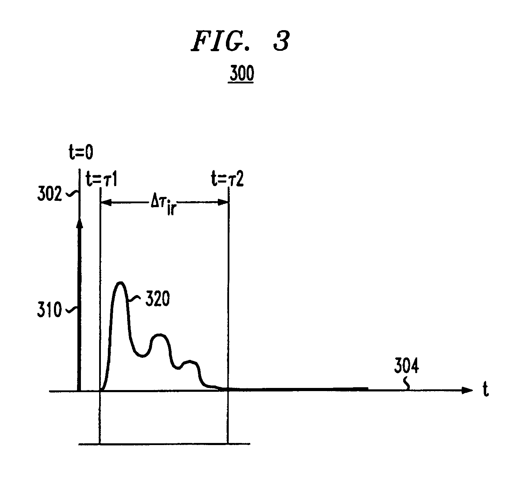

Fig. 3 shows a diagram of an impulse signal 310 and resulting impulse response 320 of a transmission medium on a chart having an amplitude axis 302 and a time axis 304. The impulse response 320 is generated by the filtering characteristics of the transmission medium as the impulse signal 310 is transmitted by a transmitter and propagates through the transmission medium. The impulse response 320 can be described by equation (1):

$$h(t) = \sum_k \gamma_k c(t - \tau_k) \qquad (1)$$

where c(t-$\tau_k$) is the shaping pulse of the system, $\gamma_k$ is the complex amplitude of the k-th path of the transmitted signal, and $\tau_k$ is the delay of the k-th path. Usually, $\gamma_k$ is a complex Gaussian random variable and is independent for the different paths. As shown in Fig. 3, the impulse response 320 is delayed from the impulse signal 310 by a time delay $\tau_1$. The impulse response time $\Delta\tau_{ir} = \tau_2 - \tau_1$ of the transmission medium 120 is the absolute difference between the start of the impulse response, $\tau_1$, and the time at which the impulse response 320 effectively ends, $\tau_2$.

Various performance obstacles arise such as Rayleigh fading and inter-symbol interference (ISI) can occur because a transmitted signal may travel along a number of different paths to a receiver. When the differences in path lengths are relatively small, multiple signal images appear at the receiver at almost the same time and performance is essentially unaffected. As the differences in path lengths increase, the multiple signal images can destructively interfere with each other, thus giving rise to Rayleigh fading.

As the differences in path lengths further increase, the received signal becomes dispersed over an extensive time period and can appear as echoes of the same signal. Inter-symbol interference (ISI) generally occurs when the two or more symbols are generated in a time span less than the impulse response time $\Delta\tau_{ir}$ of a transmission medium 120. To mitigate the effects of ISI, an equalization technique can be used to resolve the various symbols received at any given time. However, for any equalization technique to produce the most accurate symbol estimation in a signal having ISI, the technique must have a response time greater than or equal to the impulse response time $\Delta\tau_{ir}$ of the received signal.

The response time of an equalizer is the amount of time samples the equalizer acts on at any given moment. For example, an equalization system sampling an input signal once every microsecond and capable of simultaneously processing one hundred samples has a response time of one hundred microseconds. If the response time of an equalizer is less than the impulse response time of the received signal, the equalizer cannot perform as well as a comparable equalizer with a longer response time. Furthermore, as the response time of an equalizer is shortened, performance will decrease accordingly.

Unfortunately, the complexity of equalizers increases with an increasing length of the equalizer's response time. As a result, it may be impractical or impossible for a given equalizer to process a received signal if the equalizer must incorporate the entire impulse response of the received signal. This is especially true for pure MLSE equalizers where computational complexity increases exponentially with each added tap-delay. For a receiver having limited resources, the MLSE equalization techniques often must truncate the impulse response of the received signal more than competing techniques, thus leading to inferior performance as compared to other equalizers such as the ADDFSE.

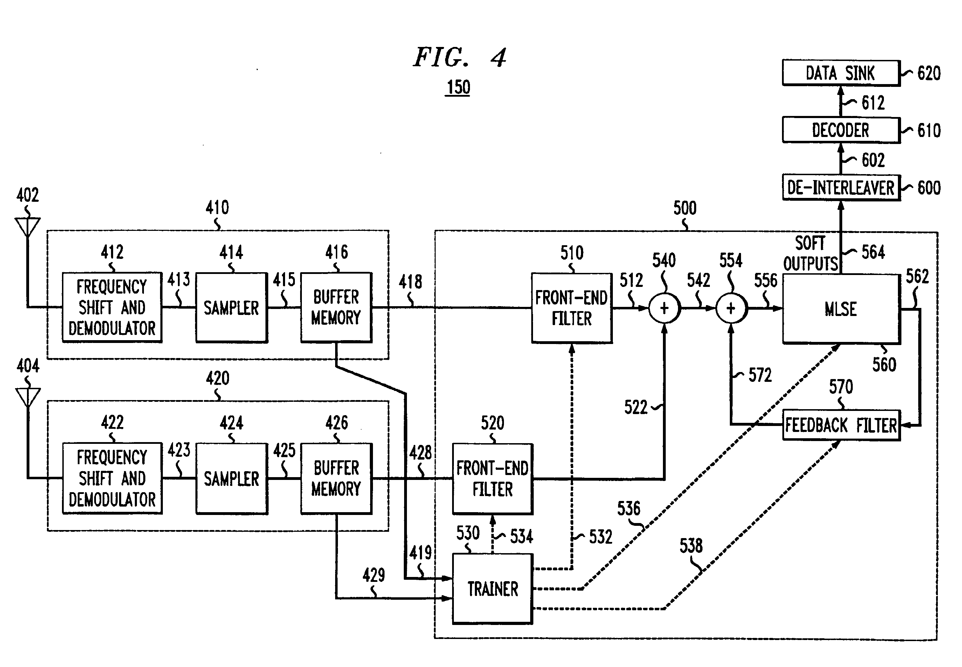

Fig. 4 shows an exemplary block diagram of a receiver 150 that includes ADDFSE. The receiver includes two antennas 402 and 404 with respective front-ends 410 and 420, an ADDFSE equalizer 500, a de-interleaver 600, a decoder 590 and a data sink 600. The first front end 410 has a first frequency shifter/demodulator 412, a first sampler 414 and a first buffer memory 416. Likewise, the second front-end 420 has a second frequency shifter/demodulator 422, a second sampler 424 and a second buffer memory 426. The equalizer 500 includes a first front-end filter 510, a second front-end filter 520, a trainer 530, a first summing junction 540, a second summing junction 554, an MLSE 560 and a feedback filter 570.

The receiver 150 receives signals having digital symbol information via the antennas 402 and 404 which pass the received signals to the front-ends 410 and 420. The front-ends 410 and 420 then process the received signals and provide the processed digital symbol information to the equalizer 500. The equalizer 500 extracts symbols and passes the extracted symbols to the de-interleaving device 600 which passes de-interleaved symbols to the decoder 610 which, in turn, provides decoded symbols to the data sink 620.

The received signal may be an iso-synchronous burst such as a Time Division Multiple Access (TDMA) burst with an 8-PSK modulation, asynchronous burst, a continuous signal or any other communication scheme. Furthermore, the signal can be modulated according to a QPSK, FSK or any other known or later developed modulation scheme. For the discussion below, it is assumed that the received signal is an iso-synchronous burst (or signal burst). It is further assumed that each antenna 402 and 404 can receive multiple images of the same burst signal, giving rise to Rayleigh fading and ISI problems, and that the received burst signals can be further corrupted with AWGN and CCI signals.

Each exemplary signal burst can contain any number of payload symbols along with a number of training symbols and guard symbols. Payload symbols are symbols containing the data to be transmitted. Training symbols are predetermined symbols placed at known positions within the signal that enable an equalizer 500 to better adapt its various systems to more accurately estimate the payload symbols. For the following discussion, it is assumed that each signal burst contains at least 26 sequential training symbols located near the middle of the burst. However, it should be appreciated that the training symbols can be arranged and disbursed anywhere within the signal burst according to any known or later developed scheme. Guard symbols are symbols that pad either or both of the beginning and end of the burst and can be used for a variety of purposes, including providing buffering, timing and synchronization.

Both antennas 402 and 404 can receive transmitted radio signals and pass the received signals to their respective front-ends 410 and 420. The frequency shifters/demodulators 412 and 422 of the front-ends 410 and 420 convert the received signals to either baseband or intermediate frequency (IF) signals, demodulate the signals and pass the demodulated signals to the samplers 414 and 424 via the links 413 and 423 respectively. The samplers 414 and 424 then convert the demodulated signals from an analog form to digital representations and pass the digitized signals to buffer memories 416 and 426 via the links 415 and 425 respectively. The buffer memories 416 and 426 can store the digitized signals and can pass the digitized signals to the trainer 530 via the links 419 and 429 respectively as well as pass the digitized signals to the front-end filters 510 and 520 via the links 418 and 428 respectively.

The trainer 530 receives the digitized signals via the links 419 and 429 and determines the various coefficients and metric weights of the equalizer 500 as if it were a DFE with F feed-forward taps per branch and B feedback taps, using MMSE criterion. This training approach is based on the assumption that the weights for an MLSE equalizer can be approximated by the weights of a DFE according to equation (2), i.e.,

$$W_{MLSE} \approx W_{DFE} \tag{2}$$

By using equation (2), any number of presently known or future developed techniques that can generate the weights for a DFE can be used to generate weights for the front-end filters 510 and 520, the MLSE 560 and the feedback filter 570. Proof of equation (1) can be found in Ariyavisitakul, S., Winters, J. and Sollenberger, N., "Joint Equalization And Interference Suppression For High Data Rate Wireless Systems", 1999 IEEE 49th Vehicular Technology Conference (May 16-20 1999), incorporated herein by reference in its entirety.

The trainer 530 determines the various feed-forward and feedback weights by applying a recursive least squares (RLS) technique using the training symbols in the digitized signal; however, any technique now known or later developed capable of determining the various coefficients for a DFE can also be used.

For an ADDFSE having F number of tap-delays in each of its front-end filters 510 and 520, $\mu$ number of taps in its MLSE 560 and ($B$-$\mu$) number of tap-delays in its feedback filter 570, the trainer 530 generates a DFE mathematical model having feed-forward filters with $F$ taps ($f_1$, $f_2$,...$f_F$) and a feedback filter with B taps ($b_1$, $b_2$....$b_\mu$, $b_{\mu+1}$, $b_{\mu+1}$,...$b_B$). Next, the $F$ coefficients for the ADDFSE front-end filters are assigned the $F$ feed-forward coefficients of the DFE model ($f_1$, $f_2$,...$f_F$) and the ($B$-$\mu$) coefficients for the ADDFSE feedback filter are assigned the last ($B$-$\mu$) feedback coefficients of the DFE model ($b_{\mu+1}$, $b_{\mu+1}$,...$b_B$). Finally, the MLSE metric weights are generated using the first $\mu$ feedback coefficients of the DFE model ($b_1$, $b_2$....$b_\mu$).

After the various weights and coefficients are determined, the trainer 530 applies them to the front-end filters 510 and 520 using links 532 and 534, respectively, the MLSE 560 using link 536 and the feedback filter 570 using link 538. Once received, the various coefficients and metric weights can be held constant as the digitized signal is passed from the buffer memories 416 and 426 to the front-end filters 510 and 520, respectively, and processed by the equalizer 500. However, it should be appreciated that some or all of the coefficients and metric weights can alternatively be updated as required by design choice.

After the various equalizer components 510, 520, 560 and 570 are programmed, the front-end filters 510 and 520 receive the digital signals from their respective front-ends 410 and 420 and then provide filtered signals to the first summing junction 540. The exemplary front-end filters 510 and 520 each include $F$ T-spaced taps where T is the symbol spacing of the received signal and each of the $F$ taps of the front-end filters 510 and 520 is weighted and summed to produce the filtered signals to the links 512 and 522, respectively. While the exemplary front-end filters 510 and 520 use T-spaced taps, it should be appreciated that the tap-delays can be T/2-spaced taps or any other temporal spacing as required by design.

To use T-spaced taps, the exemplary equalizer 500 can employ a timing recovery technique (not shown) that is optimum for a DFE with a single feed-forward tap, as described in detail in Ariyavisitakul, S.L. and Li, Y.(G.), "Joint coding and decision feedback equalization for broadband wireless channels," IEEE Journal of Selected Areas in Communications, Vol. 15, pp. 5-15, January 1997 and Ariyavisitakul, "Intelligent recovery for a broadband adaptive equalizer" (U.S. Patent Number 5,809,086), both herein incorporated by reference in their entirety. However, it should be appreciated that any presently known or later developed timing recovery technique alternatively can be used.

The filtered signals are received by the first summing junction 540 via the links 512 and 522 and added to produce a first sum. The first sum is output to the second summing junction 554 via the link 542 and is then added to a feedback signal from link 572 to produce a second sum. While the exemplary equalizer 500 depicts two summing junctions 550 and 554, it should be appreciated that the summing junctions 550 and 554 can alternatively be combined to produce a single summing junction.

The MLSE 560 receives the second sum from the second summing junction 554 via the link 556 and performs MLSE equalization on the sum to produce hard decisions at link 562 and soft decisions at link 564. While the exemplary MLSE 560 uses a Viterbi technique to perform the MLSE operation, it should be appreciated that any combination of techniques now known or later developed that can implement an MLSE alternatively can be used. The exemplary MLSE 560 has a memory of $\mu$ taps where $\mu$ is a positive integer and an appropriate span as required according to the design parameters of the equalizer 500.

Hard decisions are decisions generated by passing a received signal through the MLSE to produce a received vector, quantizing the components of the received vector against predetermined thresholds, then finding the closest resulting vector in the Hamming sense. The feedback filter 570 can receive hard decision data via the link 562 and perform feedback filtering based on the hard decision data to produce feedback data, which is provided to the second summing junction 554 via the link 572. The exemplary feedback filter 570 includes (B-μ) taps with each tap providing a weighted output. As digital values pass from tap to tap, each tap output is multiplied by a respective coefficient. The weighted outputs are then added to provide the filtered output at link 572 which is fed to the second summing junction 554. The MLSE 560 and feedback filter 570 work together to mitigate ISI and noise present in the received signal.

Soft decision decoding, like hard decision decoding, involves passing the received signal through the MLSE to produce a received vector. However, unlike hard decisions, soft decisions are generally determined by finding the closest point in the receiver's constellation against the received vector in the Euclidean distance sense, rather than the Hamming sense. While both soft decisions and hard decisions are estimates of the symbols in the received symbol streams, soft decisions contain additional information on the accuracy of the symbol estimates that can be used by an equalizer. As mentioned above, the MLSE 560 generates soft output decisions that can be provided to the de-interleaver 600 via the link 564. The soft output decisions are generated using Lee's method as described in Lee, L.N., "Real-time minimal-bit-error probability decoding of convolutional codes," IEEE Transactions on Communications, Vol. 22, pp. 146-151, (February 1974), herein incorporated by reference in it entirety. However, it should be appreciated that any technique now known or later developed that can produce soft output decisions from an MLSE device can alternatively be used.

The de-interleaver 600 receives the soft outputs, reorders the soft outputs according to a predetermined interleaved order of the received signal and provides the reordered symbols to the decoder 610 via the link 602. The decoder 610 receives the reordered data, performs error correction and decoding using convolutional decoding based on a Viterbi technique. While the exemplary decoder 610 uses a Viterbi technique to perform convolutional decoding, it should be appreciated that any presently known or later developed technique capable of performing convolutional decoding can alternatively be used. Furthermore, the decoder 610 can alternatively perform block-error correction, Turbo-error correction or any other presently known or later developed error correction scheme.

The data sink 620 receives data from the decoder 610 via the link 612. The data sink 620 can be any device capable of receiving data such as an electronic circuit capable of transforming the data to an acoustic format or a computer with a storage system. However, it should be appreciated that the data sink 620 can be any combination of hardware and software capable of receiving, relaying, storing, sensing or perceiving data provided by the decoder 610.

While the exemplary receiver 150 has two antennas 402 and 404 with respective front-ends 410 and 420 and front-end filters 510 and 520, it should be appreciated that any number of antennas, front-ends and front-end filters can be used. Furthermore, while both exemplary front-end filters 510 and 520 each have F number of taps, it should be appreciated that each front-end filter 510 and 520 can have a different number of taps from any other front-end filter 510 and 520.

Additionally, while the exemplary receiver 150 receives symbol information using antennas 402 and 404 and front-ends 410 and 420, it should be appreciated that symbol information can be received using any known or later developed device or system that can provide symbol information to the front-end filters 510 and 520 and training data to the trainer 530. Such devices include electrical wires, optical links, a direct serial/parallel cable connections, a connection over a wide area network or local area network, a connection over an intranet or an extranet, a connection over the Internet, or a connection over any other distributed processing network or system. Additionally, antennas 402 and 404 and front-ends 410 and 420 can be replaced with software devices linking various software systems. In general, any known or later developed connection, computer program, or structure usable to provide symbol information to the front-end filters 510 and 520 and training data to the trainer 530 can be used.

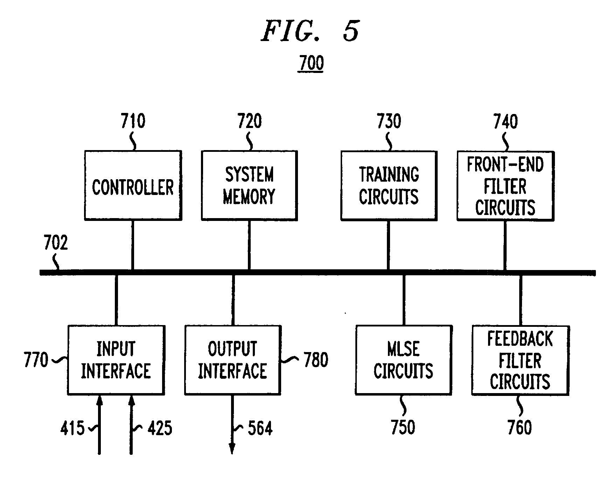

Fig. 5 shows a block diagram of an exemplary equalizer 700 with a controller 710, a system memory 720, training circuits 730, front-end filter circuits 740, MLSE circuits 750, feedback filter circuits 760, an input interface 770 and an output interface 780. The controller 710 interfaces with the other components 720-780 using a control/data bus 702.

Under control of the controller 710, the input interface 770 can receive two streams of digital symbol information via the links 415 and 425, each stream containing a burst of digital symbol information. While the input device 770 receives two streams of digital symbol information, the input device 770 can alternatively receive any number of streams of digital symbol information as required by design choice. Furthermore, while the input device 770 receives bursts of digital symbol information, the input device 770 can alternatively receive continuous streams of digital symbol information or any hybrid of continuous or burst streams of digital symbol information.

The input interface 770 can receive digital symbol information from any device such as a wireless receiver, analog to digital converter, disc drive, UART, LAN, WAN, parallel digital interface, serial digital interface, software interface or any combination of software and hardware in any form now known or later developed. For the following discussion, the input interface receives data from a wireless receiver using an analog to digital converter that converts the analog signals to digital form. Once the controller 710 imports the digital symbol information, the controller 710 stores the data in the system memory 720.

The controller 710 then copies each digitized stream of digital symbol information from the system memory 720 to the training circuits 730. The training circuits 730 then determine the various coefficients and metric weights of the front-end filter circuits 740, the MLSE circuits 750 and the feedback circuits 760 using the digital symbol information based on a DFE model. For an ADDFSE having $F$ number of tap-delays in each of its front-end filters, $\mu$ number of taps in its MLSE and ($B$-$\mu$) number of tap-delays in its feedback filter, the training circuits generate a DFE mathematical model having feed-forward filters with $F$ taps ($f_1, f_2,...f_F$) and a feedback filter with $B$ taps ($b_1, b_2....b_\mu, b_{\mu+1}, b_{\mu+1},...b_B$).

After the various coefficients and metric weights are generated, the controller 710 copies the $F$ feed-forward coefficients ($f_1, f_2,...f_F$) to the front-end filter circuits 740. The controller 710 further copies the last ($B$-$\mu$) feedback coefficients ($b_{\mu+1}, b_{\mu+1},...b_B$) to the feedback filter circuits 760 and copies the MLSE metric weights, which can be based on the first $\mu$ feedback coefficients ($b_1, b_2....b_\mu$), to the MLSE circuits 750.

The controller 710 then transfers the received streams of digital symbol information to the front-end filter circuits 740. The front-end filter circuits 740 then process each received stream to generate filtered signals, which can provide interference suppression.

As the filtered signal streams are generated, the controller 710 adds the filtered signal streams to each other along with a stream of feedback data produced by the feedback circuits 760, and transfers the summed streams to the MLSE circuits 750.

The MLSE circuits 750 receive the summed streams and perform MLSE equalization on the summed streams to produce streams of both hard decisions and soft decisions. The controller 710 then transfers the hard decision stream to the feedback circuits 760, which performs feedback filtering on the hard decisions to produce a stream of feedback data. As feedback data is produced, the controller 710 adds the feedback data to the filtered signals produced by the front-end filter circuits 740 and fed back to the MLSE circuits 750. The MLSE circuits 750 and feedback filter circuits 760 work together to mitigate ISI and noise present in the received signal streams.

As mentioned above, the MLSE circuits 750 produce soft decisions, which are estimates of the accuracy of the symbols in the received symbol streams, as well as hard decisions. As the soft decisions in the soft decision stream are produced, the controller 710 can transfer the soft decisions to the output interface 780, which then exports the soft decisions using link 564. The output interface 780 can export the soft decisions in any digital form or any information form that can represent symbols. Like the input interface 770, the output interface 780 should not be construed to refer exclusively to hardware, but can be any known or later discovered combination of hardware and software routines capable of communicating or storing data.

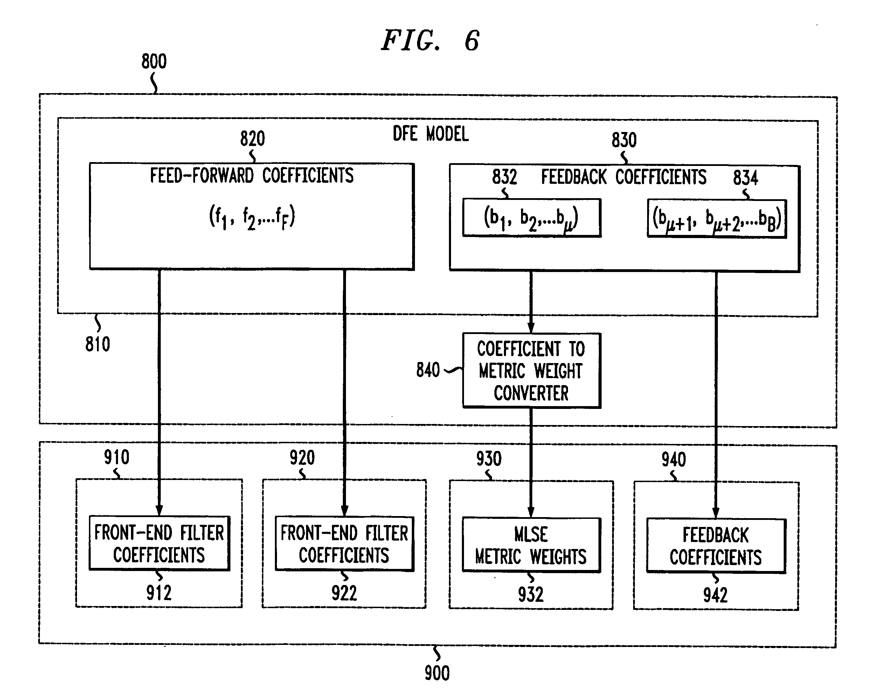

Fig. 6 illustrates the assignment of coefficients and metric weights for an ADDFSE based on a DFE model. The illustration shows a trainer 800 having a DFE model 810 and a coefficient-to-weight converter 840 and further shows an ADDFSE 900 having a first front-end filter 910, a second front-end filter 920, an MLSE 930 and a feedback filter 940. For the purpose of this discussion, the ADDFSE has $F$ number of tap-delays in each of its front-end filters 910 and 920, $\mu$ number of taps in its MLSE 930 and ($B$-$\mu$) number of tap-delays in its feedback filter 940.

As the trainer 800 receives a burst of data containing training symbols (not shown), the trainer 800 generates the feed-forward coefficients 820 and the feedback coefficients 830 for the DFE model 810. The DFE model 810 has $F$ feed-forward coefficients 820 ($f_1, f_2,...f_F$) and $B$ feedback coefficients 830 ($b_1, b_2... b_B$) which can be divided into a first feedback group ($b_1, b_2....b_\mu$) 832 and a second feedback group ($b_{\mu+1}, b_{\mu+1},...b_B$) 834.

The $F$ feed-forward coefficients 820 are assigned to the front-end coefficients 912 and 922 for both front-end filters 910 and 920. Additionally, the first feedback group 832 is transformed by the coefficient-to-metric-weight converter 840 to a series of metric weights based on the design parameters, i.e., number of taps and span, of the ADDFSE. The metric weights are then assigned to the MLSE metric weights 932 of the MLSE 930. Furthermore, the second feedback group 834 is assigned to the feedback coefficients 942 of the feedback filter 940.

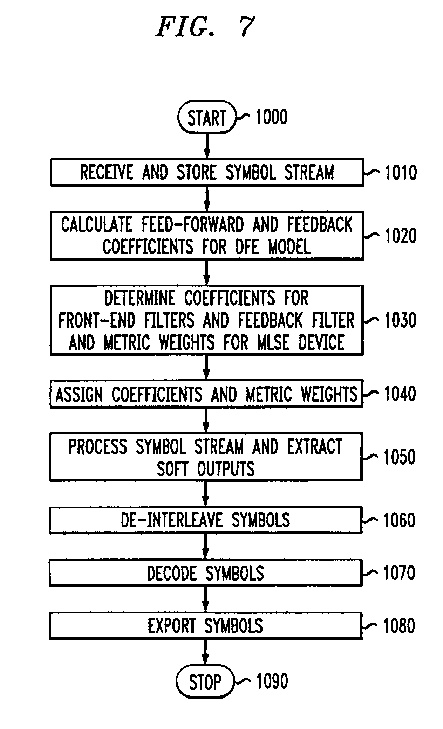

Fig. 7 illustrates a flowchart outlining an exemplary operation of a symbol estimation technique for an equalizer having one or more front-ends, an MLSE device and a feedback filter. In step 1010, a signal containing a symbol stream is received and stored. While the exemplary technique independently receives a signal using two antennas with associated electronics, it should be appreciated that the received signal can be separately received by any number of antennas with associated front-end electronics. The exemplary received symbol streams consist of finite bursts of symbols including payload symbols, training symbols and guard symbols. However, it should be appreciated that the received symbols can alternatively be derived from a continuous stream of symbols. The operation continues to step 1020.

In step 1020, the training symbols received in step 1010 are used to determine the coefficients and metric weights of various devices associated with the equalizer, including the one or more front-end filters, an MLSE device and a feedback filter. For a receiver having one or more front-end filters, each with $F$ taps and respective coefficients, an MLSE device having $\mu$ taps and respective metric weights and a feedback filter with ($B$-$\mu$) taps and respective

coefficients, the equalizer can be trained as if it were a DFE with $F$ feed-forward taps per branch and $B$ feedback taps, using MMSE criterion.

The exemplary training technique determines the various feed-forward and feedback weights by applying a recursive least squares (RLS) technique using the training symbols in the symbol stream; however, it should be appreciated that any now known or later developed technique that can determine the various coefficients for a DFE alternatively can be used. The operation continues to step 1030.

In step 1030, the $F$ coefficients of the front-end filters can be assigned the $F$ feed-forward tap values of the DFE model. Furthermore, the first $\mu$ feedback coefficient ($b_1$, $b_2$,...$b_\mu$) of the DFE model can be used to compute the metrics of the MLSE and the remaining coefficients ($b_{\mu+1}$, ...$b_B$) can be assigned to the feedback filter. The operation continues to step 1040.

In step 1040, the coefficients and metric weights determined in steps 1020 and 1030 are assigned to their respective devices and held constant over the length of the signal burst. While the exemplary technique assigns the coefficients and metrics for an entire burst, it should be appreciated that the coefficients and metrics can be periodically updated and reassigned for a symbol stream as required by a given design scheme. The operation continues to step 1050.

In step 1050, the received symbol stream is processed using the coefficients and metrics assigned in step 1040. Processing begins by providing the received symbol stream to the front-end filters. The front-end filters can process the received symbol stream to mitigate the effects of CCI. The outputs of the front-end filters are then added and provided to the MLSE device and feedback filter which can mitigate the effects of noise and ISI. As the symbol stream is processed, the MLSE device can provide both soft output decisions in addition to hard decisions, which are provided to the feedback filter. Next, in step 1060, the soft output decisions, or symbol estimates, are de-interleaved. Then, in step 1070, the de-interleaved symbol estimates are decoded. Finally, in step 1080, the decoded symbol estimates are exported and the operation stops in step 1090.

As shown in Figs. 4 and 5, the systems and methods of this invention are preferably implemented on a digital signal processor (DSP) or other integrated circuits. However, the systems and methods can also be implemented using any combination of one or more general purpose computers, special purpose computers, programmed microprocessors or microcontrollers and peripheral integrated circuit elements, hardware electronic or logic circuits such as Application Specific Integrated Circuits (ASIC), discrete element circuits, programmable logic devices such as a PLD, PLA, FPGA, or PAL, or the like. In general, any device on which exists a finite state machine capable of implementing the various elements of Figs. 4 and 5 and the flowchart of Fig. 7 can be used to implement the equalizer 500 functions.

It should also be understood that each of the circuits shown in Figs. 4 and 5 can be implemented as portions of a suitably programmed digital signal processor. Alternatively, each of the circuits shown in Fig. 4 can be implemented as physically distinct hardware circuits within a micro-controller or microcomputer, or using an ASIC, a FPGA, a PDL, a PLA, or a PAL, or discrete logic elements or discrete circuit elements. The particular form that each circuit shown in Figs. 4 and 5 will take is a design choice and will be obvious and predictable to those skilled in the art.

While this invention has been described in conjunction with the specific embodiments thereof, it is evident that many alternatives, modifications, and variations will be apparent to those skilled in the art. Accordingly, preferred embodiments of the invention as set forth herein are intended to be illustrative, not limiting. There are changes that may be made without departing from the spirit and scope of the invention.

**Claims**

**1.** A method for extracting symbols from a received signal containing symbol information using an ADDFSE equalizer having one or more front-end filters, an MLSE device and a feedback filter, comprising:

receiving the received signal;
generating at least one or more coefficients or metric weights for at least one of the one or more front-end filters, the MLSE device and the feedback filter based on a DFE model and the received signal; and
extracting symbols from the received signal based on at least the one or more coefficients or metric weights.

**2.** The method of claim 1, wherein the step of generating includes generating at least one or more coefficients for the one or more front-end filters.

**3.** The method of claim 1, wherein the step of generating includes generating at least one or more coefficients for the feedback filter.

**4.** The method of claim 1, wherein the step of generating includes generating at least one or more metric weights for MLSE device.

5. The method of claim 1, further comprising extracting soft decisions from the MLSE device.

6. The method of claim 5, further comprising deinterleaving the soft decisions to produce deinterleaved data.

7. The method of claim 6, further comprising decoding the deinterleaved data.

8. A method for generating the coefficients in an ADDFSE equalizer having one or more front-end filters, an MLSE device and a feedback filter, comprising:

   receiving a received signal; and
   generating at least one or more coefficients or metric weights for at least one of the one or more front-end filters, the MLSE device and the feedback filter based on a DFE model and the received signal.

9. The method of claim 8, wherein the step of generating includes generating at least one coefficient for the one or more front-end filters.

10. The method of claim 8, wherein the step of generating includes generating at least one coefficient for the feedback filter.

11. The method of claim 8, wherein the step of generating includes generating at least one metric weight for the MLSE device.

12. The method of claim 8, wherein the step of generating uses one or more training symbols contained in the received signal.

13. A symbol estimation device that extracts symbols from a received signal containing symbol information, comprising:

   one or more front-end filters that receive the received signal and provide one or more first filtered signals, wherein the one or more front-end filters include one or more coefficients based on a DFE model;
   an MLSE device that produces a second filtered signal based on the one or more first filtered signals; and
   a feedback filter that receives the second filtered signal to produce a third filtered signal that is fed to the MLSE device;

   wherein symbols are extracted from the MLSE based on at least one of the one or more first filtered signals.

14. The device of claim 13, wherein the MLSE device contains at least one metric weight based on the DFE model.

15. The device of claim 13, wherein the feedback filter contains at least one coefficient based on the DFE model.

16. A symbol estimation device that extracts symbols from a received signal containing symbol information, comprising:

   two or more front-end filters that receive the received signal and provide two or more first filtered signals;
   an MLSE device that produces a second filtered signal based on at least the two or more first filtered signals; and
   a feedback filter that receives the second filtered signal to produce a third filtered signal that is fed to the MLSE device;

   wherein symbols are extracted from the MLSE based on at least the two or more first filtered signals.

17. The device of claim 16, wherein one or more coefficients or metric weights for at least one of the one or more front-end filters, the MLSE device and the feedback filter are based on a DFE model.

18. The device of claim 16, wherein the two or more front-end filters contain at least one coefficient based on a DFE model.

19. The device of claim 16, wherein the feedback filter contains at least one coefficient based on a DFE model.

**20.** The device of claim 16, wherein the MLSE device contains at least one metric weight based on a DFE model.

## FIG. 1

<u>100</u>

120

## FIG. 2

<u>200</u>

220

*FIG. 3*

300

## FIG. 4

150

EP 1 229 697 A2

## FIG. 5

700

*FIG. 6*

800

810 — DFE MODEL

820 FEED-FORWARD COEFFICIENTS
$(f_1, f_2, \ldots f_F)$

830 FEEDBACK COEFFICIENTS

832 $(b_1, b_2, \ldots b_\mu)$

834 $(b_{\mu+1}, b_{\mu+2}, \ldots b_B)$

840 — COEFFICIENT TO METRIC WEIGHT CONVERTER

900

910 FRONT-END FILTER COEFFICIENTS 912

920 FRONT-END FILTER COEFFICIENTS 922

930 MLSE METRIC WEIGHTS 932

940 FEEDBACK COEFFICIENTS 942

## FIG. 7

START — 1000

RECEIVE AND STORE SYMBOL STREAM — 1010

CALCULATE FEED-FORWARD AND FEEDBACK COEFFICIENTS FOR DFE MODEL — 1020

DETERMINE COEFFICIENTS FOR FRONT-END FILTERS AND FEEDBACK FILTER AND METRIC WEIGHTS FOR MLSE DEVICE — 1030

ASSIGN COEFFICIENTS AND METRIC WEIGHTS — 1040

PROCESS SYMBOL STREAM AND EXTRACT SOFT OUTPUTS — 1050

DE-INTERLEAVE SYMBOLS — 1060

DECODE SYMBOLS — 1070

EXPORT SYMBOLS — 1080

STOP — 1090